# EUROPEAN PATENT APPLICATION

(11) **EP 4 491 916 A1**
(43) Date of publication of application: **15.01.2025**
(21) Application number: 23185075.1
(22) Date of filing: 12.07.2023
(51) Int. Cl.: F16K 1/48, F16K 7/16, F16L 37/127

(54) **COUPLING DEVICE FOR COUPLING TO A DIAPHRAGM DEVICE, DIAPHRAGM DEVICE AND METHOD**

(71) Applicant: Sartorius Stedim Biotech GmbH, 37079 Göttingen (DE)
(72) Inventor: Schenke, Tim, 37079 Göttingen (DE); Frankenberg, Christoph, 37079 Göttingen (DE); Lu, Yi-Yao, 37079 Göttingen (DE); Friedewald, Jürgen, 37079 Göttingen (DE)
(74) Representative: Michalski Hüttermann & Partner Patentanwälte mbB

(57) **Abstract**

A coupling device (1) for coupling to a flexible diaphragm (51) of a diaphragm device (50) and comprising
a base structure (10) for attaching the diaphragm device (50) thereto;
an actuator structure (20) mounted movable along an actuation direction (A) relative to the base structure (10) and having a diaphragm grasping element (22) pivotably mounted between a release position and a grasping position for coupling the actuator structure (20) to the flexible diaphragm (51) in the grasping position; and
a fixation structure (30) mounted movable along a fixation direction (F) relative to the base structure (10) between an open position and a closed position and designed to fix in the closed position the diaphragm grasping element (22) against leaving the grasping position.

A diaphragm device to be coupled with a coupling device.

## Description

The invention relates to a coupling device for coupling to a flexible diaphragm of a diaphragm device. The invention further relates to a diaphragm device with a flexible diaphragm and to be coupled with a coupling device. The invention further relates to a method for coupling a coupling device to a diaphragm device.

In chemical, pharmaceutical, biotechnological and/or life science industries, media, e.g. fluid, is typically handled using diaphragm devices with a flexible diaphragm. Diaphragm devices may be actuated and/or used in practice, e.g. as a valve in order to control media flow, in order to examine media and/or in order to process media. Particularly, diaphragm devices need to be changed and/or disassembled regularly. In this regard, coupling devices may be used in order to couple the coupling device with e.g. disposable or single-use diaphragm devices. The coupling devices may serve to couple the diaphragm devices to machines or the like. For the sake of work safety and hygiene, coupling devices typically necessitate a sophisticated procedure of assembly, e.g. involving a plurality of mostly manual mounting steps, in order to fully provide the coupling to the flexible diaphragm ready to be used in practice.

It is an object to provide solutions which enable a more secure and an easier handling of the coupling device, particularly a more failure-proof handling, when coupling to a flexible diaphragm. Particularly it is an object to avoid or reduce disadvantages of known solutions.

The object of the invention is solved by the features of the independent claims. Preferred implementations are detailed in the dependent claims.

Thus, the object is particularly solved by a coupling device for coupling to a flexible diaphragm of a diaphragm device, which coupling device comprises a base structure for attaching the diaphragm device thereto; an actuator structure and a fixation structure mounted movable along an actuation direction relative to the base structure and having a diaphragm grasping element pivotably mounted between a release position and a grasping position for coupling the actuator structure to the flexible diaphragm in the grasping position; and a fixation structure mounted movable along a fixation direction relative to the base structure between an open position and a closed position, which fixation structure is designed to fix in the closed position the diaphragm grasping element against leaving the grasping position.

The object is further solved by a diaphragm device to be coupled with a coupling device, particularly coupled to the coupling device, particularly wherein the coupling device the coupling device as described herein. The diaphragm device comprises a flexible diaphragm with a protrusion to be grasped by an actuator structure of the coupling device; a diaphragm body forming a fluid handling area variable in size and/or flow paths by means of actuation of the flexible diaphragm; and a support surface designed to support, surround and/or guide a fixation structure of the coupling device. The fixation structure is mounted movable along a fixation direction relative to a base structure of the coupling device between an open position and a closed position and designed to fix in the closed position the diaphragm grasping element against leaving the grasping position. Particularly, the diaphragm device has a diaphragm ring attached to the diaphragm body. The diaphragm ring is particularly configured and/or provided to mount the flexible diaphragm to the diaphragm body. Typically, the diaphragm ring comprises the support surface. The diaphragm device, e.g. the base structure, the actuator structure and/or the fixation structure, may comprise or consist of a polymer compound, e.g. plastics, and/or is made at least partially by means of injection molding. The diaphragm body typically has at least one port or a plurality of ports for media or fluid input and/or output; thus, the media may enter or leave the diaphragm device via the port(s).

The object is further solved by a method for coupling the coupling device, particularly the coupling device as mentioned herein to a diaphragm device, which diaphragm device has a flexible diaphragm and particularly is the one as mentioned herein. The method comprises the steps of mounting the diaphragm device to the base structure along the attachment direction, mounting a/the contact structure to the base structure along the fixation direction to sandwich the diaphragm device between the fixation structure and the contact structure and pushing the fixation structure along the fixation direction towards the closed position by means of the contact structure.

The step mounting the diaphragm device' is typically carried out and/or concluded before the step mounting the contact structure'.

In other words, the invention provides an apparatus that comprises three core components mounted movable relative to one another. Particularly, the first core component being the base structure serves to hold a diaphragm device together with its flexible diaphragm. The second core component being the actuator structure serves to provide a basis for actuating the flexible diaphragm by being movably held in the first core component and by being able to grasp the flexible diaphragm by means of grasping means. The third core component being the fixation structure serves to secure a position of the grasping means by being movable relative to the first core component and interacting with the grasping means, e.g. locking the grasping means.

The invention realizes a process-safe and user-friendly membrane coupling. The invention provides a reversible and process-safe positive way of coupling between a drive unit acting by means of the actuator structure and the flexible diaphragm. The invention provides a possibility for mechanical automatism when using the coupling device.

Due to the invention, less working steps may be necessary to make use of a diaphragm device. For example, assembly and disassembly time is reduced and shorter set-up times can be achieved. A minimization of errors and risk is possible due to the invention. There is an increased process reliability particularly when used in the biopharmaceutical environment. Ergonomics may be enhanced. Essentially, the coupling is automatized. The flexible membrane can be protected. There is no need of an additional energy source, e.g. electricity or compressed air, for an assembly. The coupling is easy to teach to users.

It is particularly not essential or necessary to actuate or move the actuation structure for the coupling. It is possible to simultaneously couple a plurality of diaphragm devices by means of a plurality of coupling devices, e.g. with the devices arranged to be coupled in a row.

The invention may be applied with diaphragm devices that are configured for controlling and dosing fluids while avoiding cross contamination and/or dead space. The diaphragm device may be intended for use in chemical, pharmaceutical, biotechnology and life science industries, particularly with increased hygienic demands.

The diaphragm device may be in the form of a diaphragm valve, diaphragm pump or a sensor device involving a flexible diaphragm. The sensor device may comprise a sensor located under the flexible diaphragm and/or in the diaphragm body.

The invention serves to realize substantially at least two connections in a process safe manner. Firstly, the diaphragm body can be connected to the coupling device. Secondly, the flexible diaphragm itself can be connected to the actuator structure of the coupling device, particularly for an engagement with a drive unit. Essentially the same applies in the case of a sensor device or sensor system with a built-in flexible diaphragm, which flexible diaphragm can be detachably connected to e.g. a transmitter.

The invention provides that automated control systems (e.g. pneumatic and/or electric ones) configured to control a coupling state of a coupling device can possibly be omitted. The coupling between the actuator structure and the flexible diaphragm has ever since required a multi-step assembly / disassembly / coupling / decoupling which the invention advantageously encounters in that a number of steps can be reduced. A process-safe connection between the drive unit and/or actuator structure and the diaphragm device can preferably be ensured by a form closure, i.e. by grasping the flexible diaphragm without necessitating a plurality of assembly or mounting steps. The invention provides a lower risk that assembly steps may be skipped by accident.

The base structure can be understood as a basic part of the coupling device to provide structural integrity and mounting functionality. For example, the base structure is a solid part that can be attached to a machine, and to which solid part the diaphragm device can be attached. The machine typically includes a/the drive unit in order to move the flexible diaphragm. The machine may also handle a fluid for the diaphragm device. The base structure may be a partially or sectionally round and/or plate shaped part. The base structure may be configured to at least partially or sectionally house and/or support the actuator structure and/or the fixation structure.

The actuator structure can be understood as an actuation means to be actuated. Particularly, the actuator structure can comprise and/or can be operated by a drive unit that actively provides a distinct mechanical displacement and/or can be driven by means of energy, e.g. electricity or the like. The actuator structure not necessarily comprises such a drive unit.

The actuator structure is typically held in the base structure and/or can be moved therein. The actuator structure has the diaphragm grasping element to be pivoted between release and grasping position. The actuator structure typically has a thrust piece with the diaphragm grasping element attached thereto. In the grasping position, the flexible diaphragm can be grasped, wherein in the release position the flexible diaphragm typically is not grasped and can be inserted into or retracted from the actuator structure. The grasping element may stop in at least one of its positions automatically. For example, the grasping element may stop in the release position and/or in the grasping position due to mechanical contact with the thrust piece.

The grasping element may be understood as a folding claw which may be folded and/or pivoted against a web on the diaphragm. The grasping element may be arranged to be contacted and/or pivoted by means of contact with the fixation structure upon moving the fixation structure relative to the base structure.

The fixation structure can be understood as a part which is meant to fix and/or move the diaphragm grasping element, particularly when the fixation structure is moved relative to the base structure. For example, the fixation structure can cover the grasping element on the thrust piece in its grasping position in order to prohibit the grasping element to pivot back to the release position. The fixation structure may exhibit and/or comprise a plate shape and/or a pressure plate. 'Fixing' or to 'fix' particularly means that a form fit, a positive fit or a blocking occurs. Thus, the fixation structure may be understood as an actuation, blocking and securing means for the diaphragm grasping element.

The fixation structure may be attached to the base structure particularly guided on the base structure. The fixation structure may comprise a plate and/or a sleeve to be guided on/in the base structure. The fixation structure may be a partially or sectionally round and/or plate shaped part. The fixation structure may have a cylinder/cylindrical section, particularly a rotationally symmetrical cylinder, to be guided on/in the base structure, and particularly to guide the actuator structure, e.g. within the cylinder. The fixation structure particularly surrounds the diaphragm grasping element in order to enable an easy fixation thereof.

The fixation structure can assume the open position where the grasping element is typically pivotable and can assume the closed position where the grasping element is typically fixed, e.g. by being covered, blocked and/or held. The open and closed positions may be achieved within a linear movement, e.g. along the actuation direction.

The diaphragm device may comprise at least the flexible diaphragm, the diaphragm body particularly with the flexible diaphragm and forming the fluid handling area and/or volume. The diaphragm device may further comprise the diaphragm ring for mounting the flexible diaphragm to the diaphragm body. The diaphragm ring may be attached to the diaphragm body, e.g. formed therewith, bonded thereto and/or produced therewith. The diaphragm body can be understood as a basic part of the diaphragm device to provide structural integrity and mounting functionality. For example, the diaphragm body is a solid part that can be attached together with the flexible diaphragm to the coupling device. At least one port or a plurality of ports, e.g. two, three, four or more, particularly formed with the diaphragm body, particularly monolithically, may serve for input/output of fluid or media. The diaphragm body typically has at least one attachment opening, e.g. for the attachment protrusion(s). The attachment protrusion may penetrate through the attachment opening. The attachment openings may have a diameter corresponding to the attachment protrusions for providing an automated orientation when assembling.

The flexible diaphragm may be understood as a membrane. The flexible diaphragm typically comprises a fluid tight, flexible and flat section or part. The flexible diaphragm may comprise an elastic material. The flexible diaphragm may be shaped together with a protrusion to be grasped.

The diaphragm body may be understood as a valve body. The diaphragm ring may be understood as a valve crown, particularly comprising an at least substantially and/or sectionally annular shape, e.g. to attach the flexible diaphragm to the diaphragm body.

Further advantageous implementations of the invention are given as follows. The features named in the implementations may be individually combined with each other or considered alone. The implementations and any optional/preferred features disclosed may serve to further enhance the advantages as named herein.

In a first preferred implementation the fixation structure is motion-coupled to the diaphragm grasping element and/or the fixation structure is designed to pivot the diaphragm grasping element, particularly when moving the fixation structure, particularly by sliding the fixation structure against the diaphragm grasping element. The fixation structure may be designed to, particularly by having at least one recess, engage with the diaphragm grasping element depending on the position of fixation structure relative to the actuator structure. The diaphragm grasping element may be arranged to slide on the fixation structure upon a relative movement between actuator structure and fixation structure so that the movement of the fixation structure can cause the diaphragm grasping element to pivot. This particularly facilitates that less errors in assembly may occur.

In another preferred implementation the actuator structure has a/the thrust piece, particularly which thrust piece is movable along the actuation direction. The diaphragm grasping element is typically pivotably mounted on the thrust piece, particularly with a pivoting axis oblique, particularly perpendicular, to the actuation direction. The pivoting axis may be established by a shaft of the thrust piece penetrating the diaphragm grasping element oblique to the actuation direction. The diaphragm grasping element may be held on a lateral side of the thrust piece. The thrust piece may be configured to push against the flexible diaphragm and/or to pull the flexible diaphragm. Particularly, there is exactly one diaphragm grasping element per thrust piece. So in case of two thrust pieces, there may be two diaphragm grasping elements. This particularly facilitates low cost of manufacture and precision in actuation of the flexible diaphragm.

In another preferred implementation the base structure comprises a guiding opening and/or a guiding protrusion, particularly one guiding protrusion/opening or two or more guiding protrusions/openings, extending along the fixation direction for guiding the fixation structure. The guiding opening may be a central opening, e.g. to insert the fixation structure and/or the actuator structure. The guiding opening may be shaped by means of a substantially symmetrical cylinder or cylindrical section. Typically, there is one guiding opening, while a plurality thereof is optional. The guiding protrusion may be arranged next to the guiding opening. The guiding opening may serve to penetrate the fixation structure. A plurality of guiding openings, e.g. two, three, four or more, may be arranged next to the guiding opening, e.g. surrounding the guiding opening and/or located on opposite sides on the guiding opening. `Next to' e.g. the guiding opening typically means 'laterally displaced', e.g. obliquely to the actuation, fixation and/or attachment direction.

The guiding protrusions may protrude at least substantially in parallel to one another. The guiding protrusion and/or the guiding opening may protrude towards the actuation, fixation and/or attachment direction. On one side of the fixation structure and/or in the region of the guiding protrusion and/or the guiding opening, a spring may be in contact with the fixation structure, wherein on the corresponding other side a locking washer, a locking ring, a nut or the like may hold the fixation structure on the base structure. For example, the fixation structure may stop at the locking washer when in a certain position, preferably in the open position. This particularly facilitates that less errors in assembly may occur.

The fixation structure may be mounted spring-loaded, particularly against the base structure and/or along the actuation, fixation and/or attachment direction. A spring-load may serve to push the fixation structure towards the open position, particularly against the locking washer on the guiding protrusion or the like. At least one spring, e.g. a coil spring, may be mounted on the guiding protrusion and between the base structure and the fixation structure. The spring-load may be present substantially in all position of the fixation structure, wherein the spring-load may be increased in the closed position relative to the open position in order to provide an automatic return function. This particularly facilitates that less errors in assembly may occur and that the assembly takes fewer steps.

In another preferred implementation the base structure comprises an attachment protrusion, particularly two, three, four or more attachment protrusions, extending along an attachment direction to engage with the diaphragm device. The attachment protrusions may protrude at least substantially in parallel to one another. The attachment protrusions may protrude towards the actuation, fixation and/or attachment direction. The attachment protrusion(s) may be arranged to penetrate and/or stick through the diaphragm device. This particularly facilitates that the diaphragm device is automatically guided at a preferred orientation and increases the risk of errors in assembly.

In another preferred implementation two or all of the actuation direction the fixation direction and/or the attachment direction run along each other and/or are at least substantially parallel. Particularly, the actuator structure and the fixation structure may be moved in the same direction and relative to the base structure. Typically, the pivot axis of the diaphragm grasping element is oblique to the directions. This particularly provides a compact design.

In another preferred implementation the fixation structure comprises a plate section and/or a guiding recess. The plate section may extend obliquely, i.e. not parallel, particularly perpendicular, to the fixation direction. The guiding recess may extend along the fixation direction. Particularly, two or more plate sections and/or two or more guiding recesses are provided. The plate section may extend radially from a central section, e.g. on opposite sides. The guiding recess may be a bore, e.g. in the plate section. The guiding recess may be arranged along the actuation, fixation and/or attachment direction. This particularly provides a compact design.

In another preferred implementation the fixation structure comprises a, particularly cylindrical, central section with a sleeve form and/or an opening, particularly for guiding the actuator structure, particularly with the plate section or plate sections extending from the central section. In this shape, the fixation structure can be easily produced. For example the fixation structure can be machined by plastic injection molding and/or a cutting process.

In another preferred implementation the fixation structure comprises a recess extending oblique, especially perpendicular, to the fixation direction. The recess is particularly configured to form an engagement section for a/the mechanical interaction with the diaphragm grasping element. The recess may be arranged for the diaphragm grasping element to penetrate through the recess in the open position, particularly so that the diaphragm grasping element is in the release position and/or not in the grasping position. The recess is particularly arranged in the central section. The recess may be a bore or a passage. The engagement section may be reinforced with a reinforcement ring, e.g. located on an outside of the fixation structure. This particularly provides a compact design.

In another preferred implementation the actuator structure comprises two or more thrust pieces each with at least one, two or more, or with exactly one of the diaphragm grasping element and movable along the actuation direction. It is preferred that there is exactly one thrust piece or that there are exactly two thrust pieces. The thrust pieces may be movable and/or driven independently from each other in order to grasp the flexible diaphragm individually and to sectionally actuate the diaphragm device. This enhances the flexibility of the coupling device.

In another preferred implementation the diaphragm grasping element is, particularly the diaphragm grasping elements are, especially on opposite sides of the actuator structure, spring loaded to automatically open when released by means of the fixation structure. The diaphragm grasping element may be attached in combination with a spring to the thrust piece, wherein the spring may serve to apply a momentum on the diaphragm grasping element for it to automatically pivot towards the release position, especially when not fixed. Thus, play may be reduced in the grasping position.

In another preferred embodiment the diaphragm grasping element(s) has/have a hook designed provide a form closure with and/or to grasp a protrusion of the flexible diaphragm, particularly by means of pivoting towards the thrust piece and/or when in the grasping position. The hook may extend with its tip and at least in the grasping position oblique or perpendicular to the actuation, fixation and/or attachment direction. The protrusion of the flexible diaphragm may comprise a section corresponding to the tip of the hook and/or a section extending oblique or perpendicular to the actuation, fixation and/or attachment direction. This particularly reduces the likeliness of errors in assembly.

In another preferred implementation a contact structure of the coupling device is provided. The contact structure is particularly designed to sandwich the diaphragm device between the base structure and the contact structure when attached to the base structure, preferably wherein the contact structure is designed to bear against the fixation structure pushing the fixation structure along the fixation direction towards the base structure to pivot and to fix the diaphragm grasping element. The contact structure may comprise a plate or plate shape. The contact structure may serve to press the diaphragm device against the actuator structure and/or the coupling device. The contact structure is meant to come into contact with surfaces of the fixation structure in order to push the fixation structure when attaching the contact structure. The contact structure may be made as a bent metal part. The contact structure may engage with the attachment protrusion, e.g. by means of an opening or recess in the contact structure to be penetrated by the attachment protrusion and/or to provide a positive fit. The attachment protrusion may be provided to engage with the opening in a radial direction, i.e. when the contact structure is moved oblique to the elongation of the attachment protrusion. Typically, the number of openings matches with the number of attachment protrusions. The contact structure provides that the coupling may be automatized and that a visual indication is given whether the coupling has occurred or not.

The object is further solved by means of a kit including a/the coupling device and a/the diaphragm device. The kit may alternatively or additionally include a plurality of the diaphragm devices, e.g. more than two. The object is further solved by means of a system including a machine for media handling and/or processing and a/the coupling device, preferably the kit. The above-mentioned method may be conducted by means of said system.

These and other aspects of the invention will be apparent from and elucidated with reference to the implementations described hereinafter.

In the drawings:
Fig. 1 shows a coupling device and a diaphragm device in a perspective explosion and half cut view;
Fig. 2 shows the coupling device and the diaphragm device of Fig. 1 in a perspective and half cut view and with the diaphragm device coupled to the coupling device; and
Fig. 3A-B shows the coupling device and the diaphragm device of Fig. 1 in a perspective half cut view with a fixation structure in an open position and a diaphragm grasping element in a release position (A) and with the fixation structure in a closed position and the diaphragm grasping element in a grasping position (B).

The description contains procedural or methodical aspects upon describing structural features; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

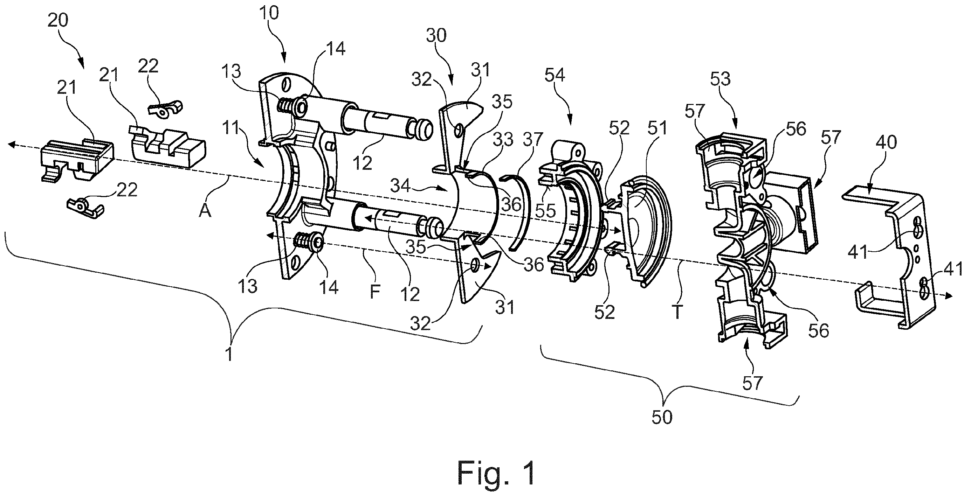

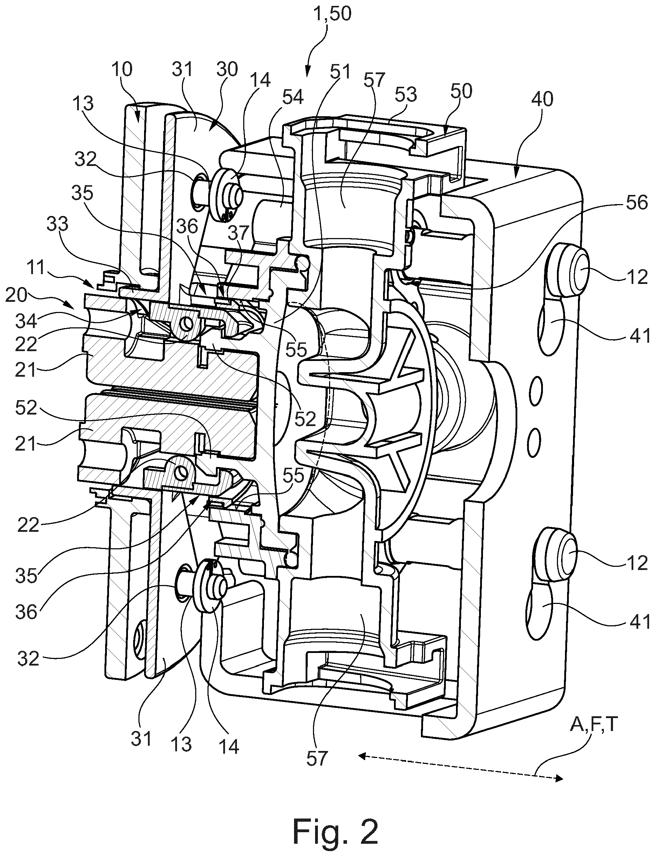

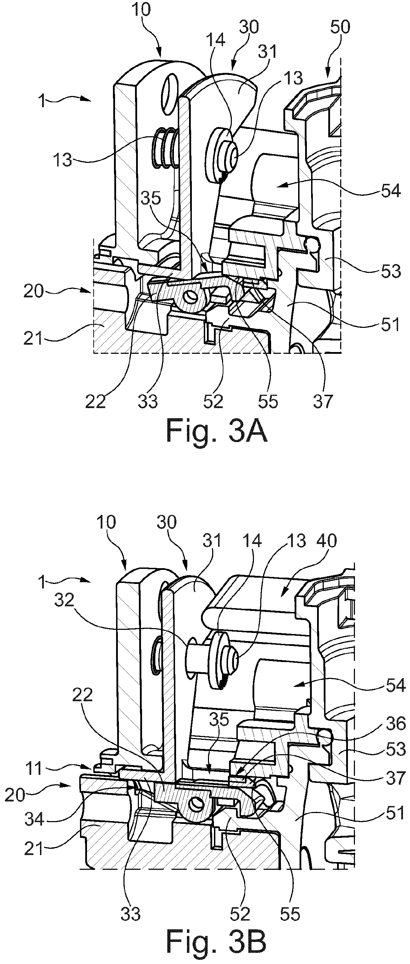

To give an overview, Fig. 1 shows a coupling device 1 for coupling to a flexible diaphragm 51 of a diaphragm device 50 in a disassembled state. Fig. 2 shows both coupling device 1 and diaphragm device in an assembled state. Fig. 3A relates to an open and a release position and Fig. 3B relates to a closed and a grasping position. The following description is meant to be applied to the Figs. as shown, wherein features from the description above are applied in an embodiment.

The coupling device 1 may be mounted to a machine which may serve to at least indirectly handle and/or process media. The diaphragm device 50 is meant for media handling e.g. in a pharmaceutical plant and may be operated as a valve with ports 57 for media inlet and/or outlet. The diaphragm device 50 is meant for single use, e.g. is a disposable item. The diaphragm device 50 can be coupled to the coupling device 1 in order to be at least indirectly coupled to said machine.

The coupling device 1 has a base structure 10, an actuator structure 20, a fixation structure 30 and a contact structure 40. The base structure 10 is provided for attaching the diaphragm device 50 thereto. The base structure 10 is provided for attaching the contact structure 40 thereto sandwiching the diaphragm device 50 in between. The actuator structure 20 is provided to be mounted movable along an actuation direction A relative to the base structure 10.

The base structure 10 substantially comprises or consists of metal. The actuator structure 20 substantially comprises or consists of a polymer compound. The fixation structure 30 substantially comprises or consists of a polymer compound. The contact structure 40 substantially comprises or consists of metal. Different combinations of materials are possible.

In this case, the actuator structure 20 substantially consists of two similar thrust pieces 21 each with a diaphragm grasping element 22 to be pivotably mounted at the corresponding thrust piece 21 and to be pivoted between the release position (cf. Fig. 3A) and the grasping position (cf. Fig. 3B). In the grasping position, the actuator structure 20 may be coupled to the flexible diaphragm 51, particularly to a protrusion thereof 52. When the diaphragm device 1 is coupled to the diaphragm device 50 as in Figs. 2, 3A and 3B, the flexible diaphragm 51 may be actuated by means of pushing and pulling in order to manipulate media flow through the diaphragm device 50 via the ports 57 or the like.

Here, the actuator structure 20 is best understood as an actuation means to be actuated with an external force input, e.g. from said machine. The actuator structure 20 in itself is not able to actuate since in the present case it merely consists of passive parts free of motors, especially not including any drive unit. The actuator structure 20 can be operated by a drive unit (not shown) that actively provides a distinct mechanical displacement along the actuation direction A. The drive unit may be driven by means electricity or compressed air. Not shown is an embodiment where the drive unit is a part of the actuator structure 20.

With respect to Fig. 1, the fixation structure 30 is meant to be mounted movable along a fixation direction F relative to the base structure 10, while in Figs. 2 and 3 the fixation structure 30 is mounted like that. The fixation structure 30 can assume the open position (cf. Fig. 3A) and the closed position (cf. Figs. 2 and 3B) and is designed to fix in the closed position the diaphragm grasping element 22 against leaving the grasping position. In Figs. 2 and 3B, the diaphragm grasping element 22 substantially cannot pivot away from the protrusion 52 or the thrust piece 21 due to being blocked and/or fixed by the fixation structure 30 assuming the closed position.

With reference to Fig. 3A, the open position is shown. Here, the diaphragm grasping element 22 may pivot between its grasping and release positions. With reference to Fig. 2 and 3B, the closed position is shown. Here, the diaphragm grasping element 22 may not pivot between its grasping and release positions, but is rather fixed in the grasping position.

The fixation structure 30 is meant to be motion-coupled to the diaphragm grasping element 22 in that the fixation structure 30 is designed to pivot the diaphragm grasping element 22 when moving the fixation structure 30 along the fixation direction F. When moving the fixation structure 30, an engagement section 36 can slide against the diaphragm grasping element 22. The diaphragm grasping element 22 therefore has a chamfer and/or an inclined surface for engagement.

The thrust pieces 21 are each configured to be movable along the actuation direction A independently from each other and together with the corresponding diaphragm grasping element 22, which diaphragm grasping element 22 is pivotably mounted on the thrust piece 21 to pivot around an axis perpendicular to the actuation direction A. Particularly, the two diaphragm grasping elements 22 are arranged to pivot on opposite sides in opposite directions when pivoting between their release and grasping positions. The two diaphragm grasping elements 22 are spring loaded to automatically open when released by means of the fixation structure 30.

The base structure 10 has one guiding opening 11 and two guiding protrusions 13 each of which extend along the fixation direction F for guiding the fixation structure 30. The guiding opening 11 is a central opening to partially insert the fixation structure 30 and the actuator structure 20. The guiding opening 11 is substantially cylindrical.

The fixation structure 30 has two plate sections 31 extending obliquely, in this case even perpendicularly, to the fixation direction F. A guiding recess 32 in each plate section 31 in the form of a bore extends along the fixation direction F.

The guiding protrusion 13 can protrude through the guiding recess 32 and is meant to hold a spring. Here, the fixation structure 30 is meant to be mounted spring-loaded against the base structure 10 and along the fixation direction F which spring-load shall push the fixation structure 30 towards the open position for an automatic return.

With reference to Figs. 2, 3A and 3B, the guiding protrusions 13 stick through the fixation structure 30 at the corresponding guiding recess 32. On one side of the fixation structure 30 and in the region of each of the guiding protrusions 13, a spring is in contact with the fixation structure 30 and on the other side a locking washer 14 on each of the guiding protrusions 13 secures the assembly. Here, the fixation structure 30 stops at the locking washer 14 in the open position (Fig. 3A).

The fixation structure 30 has a cylindrical central section 33 with a sleeve form and one opening 34 for guiding the actuator structure 20. The two plate sections 31 extend in a radial direction from the central section 33 and on opposite sides.

The base structure 10 comprises four attachment protrusions 12 of which two can be seen in Fig. 1 and which extend along an attachment direction T to engage with the diaphragm device 50. The four attachment protrusions 12 are essentially arranged in a square or rectangular shape in a view along any of the directions A, F, T. The attachment protrusions 12 are meant to penetrate through the diaphragm device 50, particularly through attachment openings 56 thereof, as particularly shown in Figs. 1 and 2.

The actuation direction A, the fixation direction F and the attachment direction T run in parallel to each other. Substantially, the directions A, F, T are the same directions.

The fixation structure 30 comprises two recesses 35 in the central section 33 that extend oblique to the fixation direction F, i.e. at least partially in a radial direction, each forming an engagement section 36 or a web for the mechanical interaction with the corresponding diaphragm grasping element 22. Each recess 35 is arranged in the central section 33 and on radially opposing sides. The fixation structure 30 is, particularly the engagement sections 36 are, reinforced by means of a reinforcement ring 37 surrounding the central section 33.

The diaphragm grasping elements 22 have a hook designed provide a form closure with and to grasp the protrusion 52 of the flexible diaphragm 51 particularly when in the grasping position, here by means of pivoting towards the thrust piece 21.

The contact structure 40 is designed to sandwich the diaphragm device 50 between the base structure 10 and the contact structure 40 when attached to the base structure 10. The contact structure 40 is designed to bear against the fixation structure 30, particularly the plate sections 31, pushing the fixation structure 30 along the fixation direction F towards the base structure 10 to pivot and to fix the diaphragm grasping elements 22.

The diaphragm device 50 is configured to be coupled with the coupling device 1. The diaphragm device 50 substantially consists of the flexible diaphragm 51, a diaphragm body 53 and a diaphragm ring 54. The flexible diaphragm 51 has a protrusion 52 substantially extending along the actuation direction A and to be grasped by the actuator structure 20.

The diaphragm body 53 forms a fluid handling area variable in size and flow paths by means of actuation of the flexible diaphragm 51. Here, the fluid handling area is accessible by means of the ports 57 formed on the diaphragm body 53 which may serve as an inlet and/or an outlet. The diaphragm device 50, especially the diaphragm body 53, is produced by plastic injection molding. Particularly, the diaphragm device 50, especially the diaphragm body 53, is made of a polymer compound. The diaphragm body 53 has, particularly forms, four attachment openings 56 with a diameter essentially equal to the diameter of the attachment protrusions 12.

The flexible diaphragm 51 is meant to be mounted to the diaphragm body 53 by means of the diaphragm ring 54. The diaphragm ring 54 has a support surface 55 designed to support, surround and guide the fixation structure 30, particularly the central section 33, here on an outside of the central section 33. The support surface 55 is facing the central section circumferentially to a radial inner direction. The diaphragm ring 54 is bonded to the diaphragm body 53 and/or the flexible diaphragm 51.

With particular reference to Figs. 3A and 3B, a method for coupling the coupling device 1 to the diaphragm device 50 is explained.

The method comprises mounting the diaphragm device 50 to the base structure 10 along the attachment direction T which is what has happened to come to the arrangement of Fig. 3A. Essentially, the diaphragm device 50 is being pushed onto the coupling device 1 along the direction A, F, T, wherein e.g. the attachment protrusions 12 penetrate the diaphragm body 53 and the protrusions 52 project into the thrust pieces 21 to be later on grasped by the diaphragm grasping elements 22.

After the above mounting step, the method comprises mounting the contact structure 40 to the base structure 10 along the direction A, F, T to sandwich the diaphragm device 50 between the fixation structure 30 and the contact structure 40. In this way, the fixation structure 30 is being pushed along the direction A, F, T towards the closed position by means of the contact structure 40. This step has happened in the transition from Fig. 3A to Fig. 3B.

Furthermore, it is an option to move the contact structure 40 downwards or perpendicular to the direction A, F, T in order to lock the overall arrangement and provide a fully coupled diaphragm device 1. The attachment protrusion 12 not only reach through the diaphragm device 50 in attachment openings 56, but also through openings 41 of the contact structure 40 thereby providing a possibility for fixation by means of the contact structure 40 when moving the contact structure perpendicular to the direction A, F, T as described. Particularly, the attachment protrusion 12 may be shaped to lock with the opening 41 upon a movement oblique or perpendicular to the attachment direction A and/or may comprise locking means (cf. particularly Fig. 2 at references 12 and 41).

### Reference signs list

- 1: device
- 10: base structure
- 11: guiding opening
- 12: attachment protrusion
- 13: guiding protrusion
- 14: locking washer

- 20: actuator structure
- 21: thrust piece
- 22: diaphragm grasping element

- 30: fixation structure
- 31: plate section
- 32: guiding recess
- 33: central section
- 34: opening
- 35: recess
- 36: engagement section
- 37: reinforcement ring

- 40: contact structure
- 41: opening

- 50: diaphragm device
- 51: diaphragm
- 52: protrusion
- 53: diaphragm body
- 54: diaphragm ring
- 55: support surface
- 56: attachment opening
- 57: port
- A: actuation direction
- F: fixation direction
- T: attachment direction

## Claims

1. Coupling device (1) for coupling to a flexible diaphragm (51) of a diaphragm device (50) and comprising
a base structure (10) for attaching the diaphragm device (50) thereto;
an actuator structure (20) mounted movable along an actuation direction (A) relative to the base structure (10) and having a diaphragm grasping element (22) pivotably mounted between a release position and a grasping position for coupling the actuator structure (20) to the flexible diaphragm (51) in the grasping position;
and a fixation structure (30) mounted movable along a fixation direction (F) relative to the base structure (10) between an open position and a closed position and designed to fix in the closed position the diaphragm grasping element (22) against leaving the grasping position.

2. Coupling device (1) according to the preceding claim, wherein the fixation structure (30) is motion-coupled to the diaphragm grasping element (22) and/or is designed to pivot the diaphragm grasping element (22) when moving the fixation structure (30), particularly by sliding against the diaphragm grasping element (22).

3. Coupling device (1) according to one of the preceding claims, wherein the actuator structure (20) has a thrust piece (21) that is movable along the actuation direction (A) and the diaphragm grasping element (22) is pivotably mounted on the thrust piece (21), particularly with a pivoting axis oblique, particularly perpendicular, to the actuation direction (A).

4. Coupling device (1) according to one of the preceding claims, wherein the base structure (10) comprises a guiding opening (11) and/or a guiding protrusion (13), particularly two or more guiding protrusions (13), extending along the fixation direction (F) for guiding the fixation structure (30), preferably wherein the fixation structure (30) is mounted spring-loaded, particularly against the base structure (10) and/or along the fixation direction (F), particularly a spring-load pushing the fixation structure (30) towards the open position.

5. Coupling device (1) according to one of the preceding claims, wherein the base structure (10) comprises an attachment protrusion (12), particularly two, three, four or more attachment protrusions (12), extending along an attachment direction (T) to engage with the diaphragm device (50).

6. Coupling device (1) according to one of the preceding claims, wherein two or all of the actuation direction (A), the fixation direction (F) and/or the attachment direction (T) run along each other and/or are at least substantially parallel.

7. Coupling device (1) according to one of the preceding claims, wherein the fixation structure (30) comprises a plate section (31) extending obliquely to the fixation direction (F) and/or a guiding recess (32) extending along the fixation direction (F), particularly comprises two or more plate sections (31) and/or two or more guiding recesses (32).

8. Coupling device according to one of the preceding claims, wherein the fixation structure (30) comprises a, particularly cylindrical, central section (33) with a sleeve form and/or an opening (34), particularly for guiding the actuator structure (20), particularly with the plate section(s) (31) extending from the central section (33).

9. Coupling device (1) according to one of the preceding claims, wherein the fixation structure (30) comprises a recess (35) extending oblique to the fixation direction (F) forming an engagement section (36) for the mechanical interaction with the diaphragm grasping element (22), particularly wherein the recess (35) is arranged in the central section (33) and/or the engagement section (36) is reinforced with a reinforcement ring (37).

10. Coupling device (1) according to one of the preceding claims, wherein the actuator structure (20) comprises two or more thrust pieces (21) each with at least one of the diaphragm grasping element (22) and movable along the actuation direction (A).

11. Coupling device (1) according to one of the preceding claims, wherein the diaphragm grasping element (22) is, particularly the diaphragm grasping elements (22) are, especially on opposite sides of the actuator structure (20), spring loaded to automatically open when released by means of the fixation structure (30).

12. Coupling device (1) according to one of the preceding claims, wherein the diaphragm grasping element(s) (22) has/have a hook designed provide a form closure with and/or to grasp a protrusion (52) of the flexible diaphragm (51), particularly by means of pivoting towards the thrust piece (21) and/or when in the grasping position.

13. Coupling device (1) according to one of the preceding claims and comprising a contact structure (40) designed to sandwich the diaphragm device (50) between the base structure (10) and the contact structure (40) when attached to the base structure (10), preferably wherein the contact structure (40) is designed to bear against the fixation structure (30) pushing the fixation structure (30) along the fixation direction (F) towards the base structure (10) to pivot and to fix the diaphragm grasping element (22).

14. Diaphragm device (50) to be coupled with a coupling device (1) particularly according to one of the preceding claims, comprising
a flexible diaphragm (51) with a protrusion (52) to be grasped by an actuator structure (20) of the coupling device (1);
a diaphragm body (53) forming a fluid handling area variable in size and/or flow paths by means of actuation of the flexible diaphragm (51); and
a support surface (55) designed to support, surround and/or guide a fixation structure (30) of the coupling device (1), the fixation structure (30) mounted movable along a fixation direction (F) relative to a base structure (10) of the coupling device (1) between an open position and a closed position and designed to fix in the closed position the diaphragm grasping element (22) against leaving the grasping position;
and preferably by a diaphragm ring (54) attached to the diaphragm body (53) to mount the flexible diaphragm (51) to the diaphragm body (53) and comprising the support surface (55);
optionally wherein the diaphragm device (50) comprises or consists of a polymer compound and/or is made at least partially by means of injection molding.

15. Method for coupling the coupling device (1) according to one of claims 1 to 13 to a diaphragm device (50), particularly according to the preceding claim, having a flexible diaphragm (51), comprising the steps of
mounting the diaphragm device (50) to the base structure (10) along the attachment direction (T),
mounting a/the contact structure (40) to the base structure (10) along the fixation direction (F) to sandwich the diaphragm device (50) between the fixation structure (30) and the contact structure (40) and pushing the fixation structure (30) along the fixation direction (F) towards the closed position by means of the contact structure (40).
